Europäisches Patentamt

European Patent Office

Office européen des brevets

(19)

(11) Publication number: **0 441 434 A1**

# EUROPEAN PATENT APPLICATION

(12)

(21) Application number: 91200211.0

(51) Int. Cl.5: **G11B 27/02**

(22) Date of filing: **04.02.91**

(30) Priority: **06.02.90 NL 9000281**

(43) Date of publication of application:
**14.08.91 Bulletin 91/33**

(84) Designated Contracting States:
**BE DE ES FR GB IT**

(71) Applicant: **N.V. Philips' Gloeilampenfabrieken**
**Groenewoudseweg 1**
**NL-5621 BA Eindhoven(NL)**

(72) Inventor: **Roth, Rudolf**
**c/o INT. OCTROOIBUREAU B.V. Prof.**
**Holstlaan 6**
**NL-5656 AA Eindhoven(NL)**

(74) Representative: **Groenendaal, Antonius**
**Wilhelmus Maria et al**
**Internationaal Octrooibureau B.V. Prof.**
**Holstlaan 6**
**NL-5656 AA Eindhoven(NL)**

(54) **Method of and device for recording signals on a record carrier.**

(57) A method is disclosed of recording a first signal (Vs1) and a second signal (Vs2) on a record carrier (1), the end of the recording of the first signal and the beginning of the recording of the second signal being situated at an arbitrary time interval from each other. Both signals comprise frames (B0-B31). The frames comprise bit groups (Q-word) within which a predetermined relationship exists between bits, which predetermined relationship enables an error correction to be realised. The bits of each bit group are arranged in n successive frames.

The beginning (42b) of the recorded second signal (Vs2) is substantially contiguous to the end of the recorded first signal. In order to prevent the predetermined relationship between the bits of the bit groups from being disturbed in the boundary area between the first signal and the second signal, steps are taken to ensure that the recorded first signal (Vs1) ends with at least n frames of a predetermined bit configuration and, moreover, the recorded second signal (Vs2) begins with at least n frames of the predetermined bit configuration.

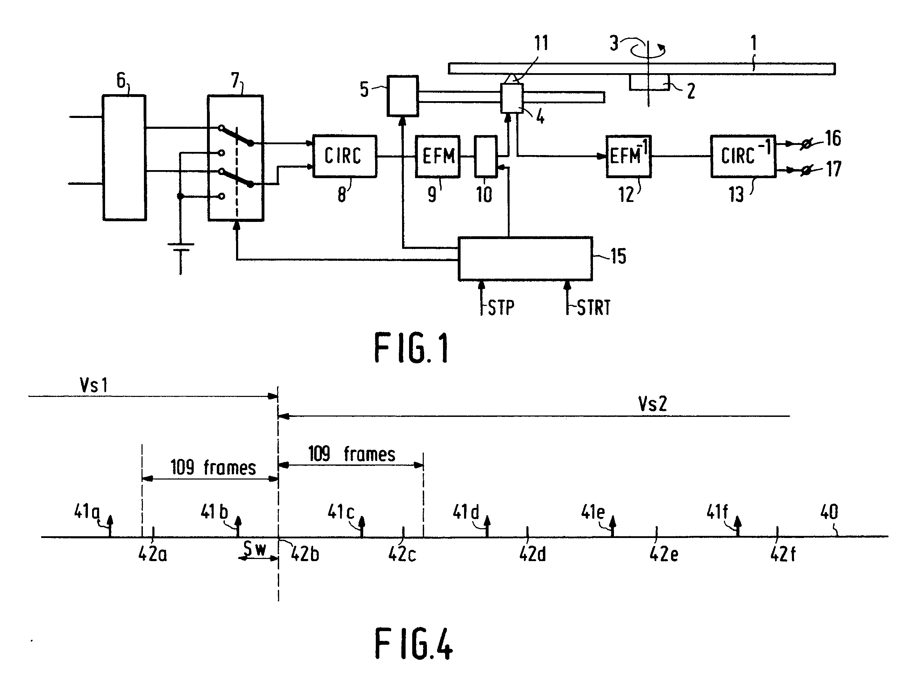

Moreover, a device (Fig. 1) for carrying out the method is disclosed.

FIG.4

## METHOD OF AND DEVICE FOR RECORDING SIGNALS ON A RECORD CARRIER.

The invention relates to a method of recording a first and a second signal on a record carrier, the end of the recording of the first signal and the beginning of the recording of the second signal being situated at an arbitrary time interval from each other, both signals comprising frames and a predetermined relationship existing between bits of predetermined bit groups, the bits of each bit group being arranged in n successive frames, which predetermined relationship enables an error correction to be realised, and the beginning of the second signal recorded on the record carrier being substantially contiguous to the end of the recorded first signal.

The invention further relates to a device for carrying out this method, for which purpose the device comprises an encoding circuit for converting a bit stream into frames comprising bit groups which are in a predetermined fixed relationship with each other, the bits of each group being arranged in n consecutive frames, which device comprises scanning means for scanning a track on the record carrier, write means for recording the frames in the track being scanned and control means for terminating the recording at a specific position in the track and for resuming recording at said position at a later instant.

Such a method and device are known from EP-A 0,325,329 (PHQ 88002). The method and the device described therein pertain to the recording of, inter alia, a standard CD audio signal comprising EFM frames. In such a CD signal the bit groups complying with the predetermined relationship comprise Q-words whose bits are arranged in 109 EFM frames. A problem associated with CD audio signals thus recorded is that an annoying click is audible in the reproduced audio signal at the transition from the first to the second signal.

It is an object of the invention to provide a method and a device as defined in the opening paragraphs, enabling audio signals to be recorded successively without an annoying click being produced in the audio signal reproduced when the record carrier on which these audio signals have been recorded is played.

As regards the method this object is achieved, according to the invention, in that the recording of the first signal ends with at least n frames of a predetermined bit configuration and in that the recording of the second signal begins with at least n frames of the same predetermined bit configuration.

As regards the device said object is achieved in that the device comprises means for causing the encoding circuit to generate at least n frames of a predetermined bit configuration in a time interval directly preceding the termination of the recording and means for causing the encoding circuit to generate n frames of the same predetermined bit configuration in a time interval directly following resumption of the recording.

The invention is based inter alia on the recognition of the fact that the click in the reproduced audio signal at the transition from the first to the second signal results from the fact that the relationship between bits of the predetermined bit groups (Q-word) is disturbed in the vicinity of the transition. when the signals are read a customarily used error correction circuit will detect errors and will attempt to correct the detected errors. However, the disturbance in the relationship in the bit groups (Q-word) causes a misinterpretation of the bit groups and hence an erroneous correction, which produces the annoying click. By recording at least n frames of the same bit configuration before and after the transition from the first to the second signal the relationship between the bits of the bit groups (Q-word) is maintained, which precludes misinterpretation and the annoying consequences of this. Preferably, a configuration corresponding to an inaudible audio signal is selected for the predetermined bit configuration. This inaudible audio signal may be, for example, a signal of a frequency outside the audibility range of the human ear, provided that the bit configuration is the same for all the associated frames. However, preferably a signal of constant signal level, in particular zero level, is selected for the inaudible signal.

In principle, the invention may be employed for recording all signals for which the recorded signal comprises frames, bit groups arranged in a number frames being in a predetermined relationship enabling error correction to be applied. However, the invention is found to be particularly suitable for recording standard CD audio signals. Further embodiments of the invention and the advantages thereof will now be described in detail with reference to Figures 1 to 5, in which

Fig. 1 shows an embodiment of the device in accordance with the invention,

Fig. 2 illustrates the operation of a CIRC encoder used in the device shown in Fig. 1,

Fig. 3 shows how the bits of the predetermined bit groups, between which bits the predetermined relationship exists, are arranged in the frames when the CIRC encoder is used,

Fig. 4 shows by way of illustration a track in which two signals have been recorded using the method in accordance with the invention, and

Figs. 5a and 5b are flow charts for programs carried out by a control unit used in the device shown in Fig. 1.

Fig. 1 shows an embodiment of a recording device in accordance with the invention for recording CD audio signals on a disc-shaped record carrier 1, for example the optical record carrier disclosed in the aforementioned Patent Application EP-A 0,325,329, incorporated herewith by reference. The record carrier is rotated about an axis 3 by a customary drive arrangement 2. An optical read/write head 4 is arranged opposite the rotating record carrier 1 and can be moved in a radial direction relative to the record carrier 1 by means of a customary positioning device 5.

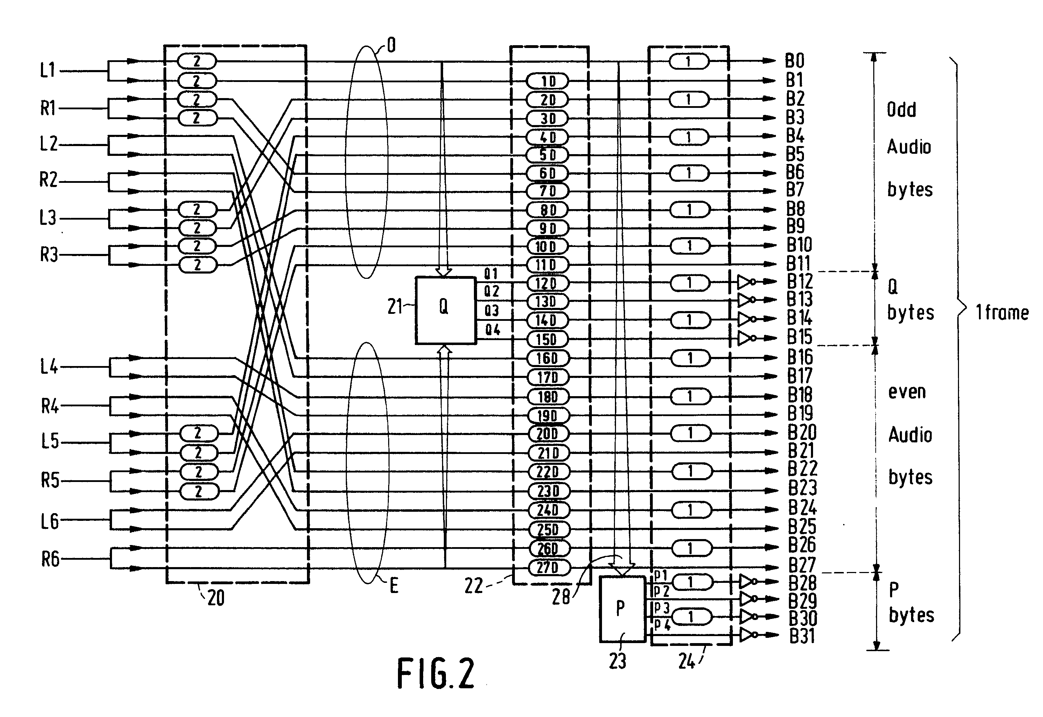

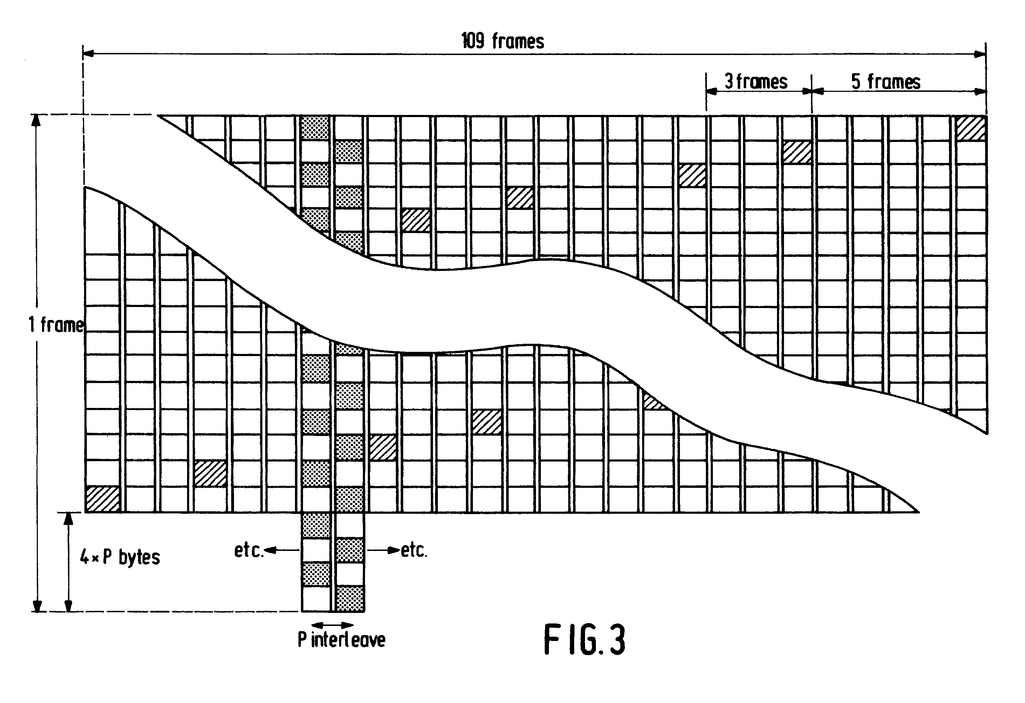

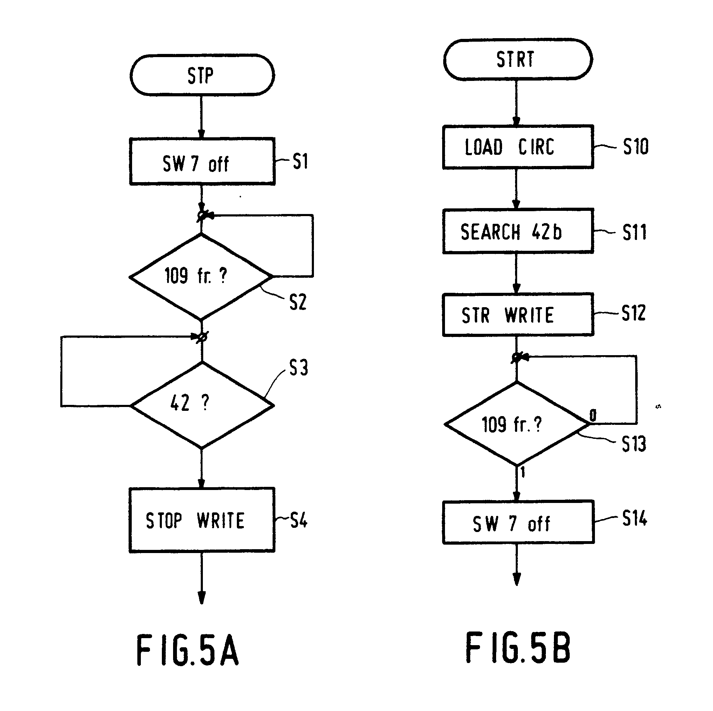

A signal processing circuit 6, for example a digital-to-analog converter or a digital audio interface circuit, supplies audio information in the form of digital signal samples to a customary CIRC encoder 8 via an electronic switch 7, which encoder converts the digitized signal into EFM frames. For a detailed description of a such a CIRC encoder reference is made to the books "The Art of Digital Audio", Focal Press (ISBN 0-240-51270.7), pp. 466-470, and "Principles of Optical Disc Systems", Adam Hilger Ltd., (ISBN-085274-785-3), pp. 250-254, which books are incorporated herewith by reference. However, for a better understanding of the invention the operation of the CIRC encoder will be described briefly with reference to Fig. 2. Six 16-bit signal samples L1-L6, representing the left channel of a stereo audio signal, and six 16-bit signal samples R1-R6, representing the right channel of the stereo audio signal, are grouped at the input of the CIRC encoder. Each 16-bit sample is divided into two bytes of 8 bits each. The bytes are split into even bytes originating from the even signal samples L2, L4, L6 and R2, R4 and R6, and odd bytes originating from the signal samples L1, L3, L5 and R1, R3 and R5, the odd bytes being delayed by a time interval corresponding to the length of 2 bytes in a first processing step 20. In a second processing step 21 four error-correction bytes Q1-Q4 are derived from the even bytes and the delayed odd bytes. The Q error correction bytes and the bytes from which these error correction bytes have been derived form a bit group having a length of 28 bytes of 8 bits each, which bit group will be referred to briefly as Q-word. The bits of the Q-word are in a predetermined relationship, which enables error correction to be applied. Subsequently, in a third processing step 22 the bytes of the Q-word are delayed relative to each other by time intervals which vary from 0 to 27D, D being a unit delay whose length corresponds to 4 bytes. In a fourth processing step 23 four error correction bytes P1-P4 are derived from the bytes thus delayed. The error correction bytes P1-P4 and the bytes from which they have been derived form the P-word. The bytes of the P-word are divided into two groups, a which one group is delayed by a time corresponding to the length of one byte in a fifth processing step 24. The 32 bytes B0-B31 available at the end of the processing step 24 form an EFM frame, the bytes B0-B11 representing 12 odd bytes. The bytes B12-B14 represent four Q-correction bytes. The bytes B16-B27 represent 12 even bytes. The bytes B28-B31 represent four P-correction bytes. As a result of the different delays in the processing steps 22 and 24 the bytes of the Q-word and the P-word are arranged in a large number of successive frames. By way of illustration the arrangement of the Q-word bytes is represented by the hatched blocks in Fig. 3. As is apparent from Fig. 4 the bytes of a Q-word are arranged in a block of 109 frames.

As is shown in Fig. 1, the frames supplied by the CIRC encoder 8 are applied to an EFM modulator of a customary type for modulating the series of EFM frames received by the CIRC encoder and for adding the subcode and the synchronising information to the received EFM frames. The signal appearing on the output of the EFM modulator 9 is a CD signal. This CD signal is applied to a write circuit 10 for driving a radiation source in the read/write head 4 to generate a write beam 11. The intensity of the write beam 11 is then controlled in a customary manner so as to record on the record carrier 1 an information pattern corresponding to the CD signal. The information thus recorded can be read by setting the read/write head 4 to the read mode and subsequently scanning the information pattern by means of the read/write head 4. A read signal supplied by the read/write head 4 is then demodulated by an EFM demodulator 12. The subcode information is removed from the demodulated signal, which is applied to a CIRC decoder 13 as a series of EFM frames, which decoder recovers the signal samples from the received information. The CIRC decoder 13 is also of a customary type, which is described comprehensively in alia in the aforementioned books. In two steps the CIRC decoder 13 detects and corrects bits having an incorrect logic value in the EFM frames on the basis of the P-words and the Q-words. The signal samples recovered and, if necessary, corrected by the CIRC decoder 13 are output via signal lines 16 and 17.

The device shown in Fig. 1 further comprises a control unit 15, for example in the form of a microcomputer, for controlling the recording and the read process. A stop command STP may be applied to the control unit 15 to interrupt the recording process. In response to the stop command STP signal recording is discontinued at a retraceable location on the record carrier 1. When the record carrier disclosed in EP-A-0,325,329 is used this can be achieved by allowing the recording process to be stopped only at locations situated at a predetermined distance from the synchronising signals recorded in the track. By way of illustration Fig. 4 shows diagrammatically the track with the preformed synchronisation marks, the track bearing the reference numeral 40 and the locations of the synchronising signals bearing the reference numerals 41a-41f.

The locations which may be used for stopping the recording process are indicated by the reference numerals 42a-42f. The locations 42, hereinafter briefly referred to as potential linking positions, are spaced at a predetermined distance from the locations 41 where the synchronising signals are situated. When CD signals are recorded this distance may be expressed in EFM frames.

To start a new recording of a subsequent signal a start command STRT may be applied to the control unit. In response to the start command STRT the read/write head 4 is brought opposite the linkage position where the last recording has been interrupted, indicated by 42b in Fig. 4, and recording is re-started once this linking position is reached. For a more detailed description reference is made to the aforementioned European Patent Application EP-A-0,325,329.

As illustrated in Fig. 3 the bytes of the Q-word are arranged in 109 frames. In order to ensure that the relationship between the Q-word bytes is maintained in the vicinity of the linking position at least 109 frames having a predetermined bit configuration are recorded at the end of a recorded signal Vs1, directly preceding the linking position 42b, and in addition at least 109 frames having the same bit configuration are recorded at the beginning of a recorded signal Vs2 contiguously to the linking position 42b.

This can be achieved by applying groups of twelve signal samples L1-L6 and R1-R6 having constant bit configurations to the CIRC encoder 8 at least 109 frames before recording is terminated. Preferably, bit configurations representing an inaudible audio signal are used for the signal samples. For simplicity it is preferred to apply signal samples of constant signal level and, in particular, signal samples of zero signal level.

In the embodiment shown in Fig. 1 the signal samples of constant signal level are applied for example by means of the electronic switch, which transfers either the signal value supplied by the signal processing circuit 6 or the constant signal value to the CIRC encoder 3 depending on the control signal supplied by the control unit.

Figs. 5a and 5b are flow charts of programmes which can be carried out by the control unit 15 to control the electronic switch 7. Fig. 5a shows the flow chart of a program carried out in response to the stop command STP and Fig. 5b shows the flow chart of the program carried out in response to the start command STRT.

In the flow chart of Fig. 5a a step S1 is the first step performed in response to the stop command STP. In the step S1 the switch 7 is set to a state in which signal samples of constant signal value are applied to the CIRC encoder 8. Subsequently, in a step S2 a waiting time is observed until at least 109 EFM frames have been recorded. Once a permissible linking position 42 is reached a waiting time is observed in a step S3 until the read/write head 4 has reached one of the permissible linking positions 42. As soon as a linking position is reached the control unit 15 terminates the recording process via the write circuit 10 in a step S4.

In the flow chart of Fig. 5b S10 is the first step performed in response to the start command STRT. During the step S10 the CIRC encoder 8 is filled with a bit configuration corresponding to the signal samples having said constant signal value. This can be achieved very simple, for example by setting the switch 7 to the state in which the signal samples of constant value are applied to the CIRC encoder 8 and subsequently waiting until the CIRC encoder 8 is filled completely with the bit configurations determined by these signal samples. However, it is to be noted that, in principle, the CIRC encoder can also be filled in the desired manner by loading the CIRC encoder with the desired contents in a single step by means of a preset signal. After the step S10 a step S11 is performed in which under control of the control unit the linking position 42b is located where recording of the last signal has been discontinued. When the read/write head 4 has reached the linking position 42b recording is started via the write circuit 10 in a step S12. In a step S13 a waiting time is observed until at least 109 frames have been recorded. Subsequently, in a step S14 the switch 7 is set to a state in which the signal samples supplied by the signal processing circuit 6 are transferred to the CIRC encoder 8 and the actual recording of the information supplied by the signal processing circuit 6 is thus started.

The invention has been described by way of illustration for an optical recording device for recording CD audio signals. The intensity of the write beam is then modulated in conformity with the signal to be recorded. However, the invention may also be used in magneto-optical recording where the record carrier is scanned with a write beam and a magnetic field modulated in conformity with the information to be recorded is generated in the record carrier area scanned with the write beam. Moreover, it is to be noted that the invention can also be applied to recording devices of other types, such as magnetic recording devices. Neither is the invention limited to recording devices for CD signals. In principle, the invention can be employed for recording signals divided into frames, the bits of bit groups in a plurality of successive frames being in predetermined relationships on the basis of which error correction is possible.

## Claims

1. A method of recording a first and a second signal on a record carrier, the end of the recording of the first signal and the beginning of the recording of the second signal being situated at an arbitrary time interval from each other, both signals comprising frames and a predetermined relationship existing between bits of predetermined bit groups, the bits of each bit group being arranged in n successive frames, which predetermined relationship enables an error correction to be realised, and the beginning of the second signal recorded on the record carrier being substantially contiguous to the end of the recorded first signal, characterized in that the recording of the first signal ends with at least n frames of a predetermined bit configuration and in that the recording of the second signal begins with at least n frames of the same predetermined bit configuration.

2. A method as claimed in Claim 1, characterized in that the signals represent an audio signal in which the frames having the predetermined bit configurations represent an inaudible signal.

3. A method as claimed in Claim 2, characterized in that the inaudible signal is a signal of constant signal level.

4. A method as claimed in Claim 3, characterized in that the constant signal level is the zero level.

5. A method as claimed in any one of the preceding Claims, characterized in that both recorded signals are CD signals.

6. A device for carrying out the method as claimed in Claim 1, which device comprises an encoding circuit for converting a bit stream into frames comprising bit groups which are in a predetermined fixed relationship with each other, the bits of each group being arranged in n consecutive frames, which device comprises scanning means for scanning a track on the record carrier, write means for recording the frames in the track being scanned and control means for terminating the recording at a specific position in the track and for resuming recording at said position at a later instant, characterized in that the device comprises means for causing the encoding circuit to generate at least n frames of a predetermined bit configuration in a time interval directly preceding the termination of the recording and means for causing the encoding circuit to generate n frames of the same predetermined bit configuration in a time interval directly following resumption of the recording.

7. A device as claimed in Claim 6, characterized in that the means for causing at least frames of a predetermined bit configuration to be generated comprise means for applying to the encoding circuit a bit stream representing an inaudible audio signal.

8. A device as claimed in Claim 7, characterized in that the inaudible signal is a signal of constant signal level.

9. A device as claimed in Claim 8, characterized in that the inaudible signal is a signal of constant signal level.

10. A device as claimed in any one of the Claims 6 to 9, characterized in that the device is adapted to record a standard CD signal, the encoding circuit being a CIRC encoder.

**FIG.1**

EP 0 441 434 A1

**FIG.4**

FIG.2

FIG.3

FIG.5A

FIG.5B

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| A | PATENT ABSTRACTS OF JAPAN vol. 9, no. 37 (P-335)(1760) 16 February 1985, & JP-A-59 178664 (MATSUSHITA DENKI SANGYO K.K.) 9 October 1984, * the whole document * | 1,6,10 | G 11 B 27/02 |
| A | GB-A-2 057 745 (MITSUBUSHI DENKI K.K.) | | |
| A | GB-A-2 061 575 (MATSUSHITA ELECTRIC) | | |
| A | PATENT ABSTRACTS OF JAPAN vol. 9, no. 292 (P-406)(2015) 19 November 1985, & JP-A-60 129990 (NIPPON COLUMBIA K.K.) 11 July 1985, * the whole document * | | |

TECHNICAL FIELDS
SEARCHED (Int. Cl.5)

G 11 B

The present search report has been drawn up for all claims

| Place of search | Date of completion of search | Examiner |
|---|---|---|
| The Hague | 28 March 91 | CARTRYSSE A.A.H. |